# EUROPEAN PATENT SPECIFICATION

(11) **EP 1 094 582 B1**
(45) Date of publication and mention of the grant of the patent: **21.04.2010**
(21) Application number: 00309299.6
(22) Date of filing: 23.10.2000
(51) Int. Cl.: H02G 3/06

(54) **Conduit junction piece and cover therefor**
Kabelkanal Übergangstück und Deckel dafür
Pièce de jonction et couvercle pour conduite

(30) Priority: 22.10.1999 GB 9924923
(43) Date of publication of application: 25.04.2001
(73) Proprietor: Electrix International Limited, Bishop Auckland, County Durham DL14 6XP (GB)
(72) Inventor: Thompson, Malcolm, Weardale Co Durham DL13 3HE (GB)
(74) Representative: Vinsome, Rex Martin

(56) References cited:
- EP-A- 0 933 851
- EP-A- 0 933 852

## Description

The present invention relates to conduit junction pieces and to covers for conduits, and relates particularly, but not exclusively, to corner pieces of conduit and their respective covers in the form of lids and cover plates. Such conduit includes that used to carry electrical wiring, powdered or granular material, liquids or gases.

Trunking or conduit systems for electrical wiring are well known, and our earlier Patent Application No GB9702408.7 includes improvements relating to such systems. That application particularly describes a corner piece, for turning a corner in a horizontal plane.

Conduit systems for electrical wiring are commonly used within the food, beverage and pharmaceutical industries, to protect the said wiring and to maintain surfaces which are easy to clean. It is therefore important that such conduit systems are provided with smooth surfaces which are less inclined to trap dirt and are therefore easy to clean.

These types of conduit systems are primarily made from stainless steel. In order to minimise the cost of production of the parts of such conduit systems, it is of considerable advantage to produce parts which can be cut and bent from sheet material and with the minimum amount of welding or adhesion, or the addition of further parts which would require welding or adhesion.

For example Figure 1 shows a prior art conduit corner system as described in our Patent Application No GB9702408.7. The corner system comprises a corner piece 10, lid 12 and cover plate 14. Corner piece 10 cannot be constructed by the simple cutting and bending of a blank cut from a single sheet of material. Similarly, when lid 12 is made from a single cut and bent sheet of material, edge portions 16 cannot be formed without producing notches 18 unless additional material is added. The acute angle of notches 18 makes them inclined to trap dirt and they therefore represent a hygiene risk to the pharmaceutical, food and beverage industries. The cost of cutting and welding into position pieces to fill in notches 18 significantly increases the cost of manufacture.

Relevant examples of prior art include EP0933851 and EP0933852. EP0933851 relates to a device for connecting two stretches of raceway for electrical cable systems. EP0933852 relates to an elbow for the angular connection of two stretches of raceway for electrical cable systems.

Preferred embodiments of the present invention seek to overcome the above disadvantages of the prior art.

According to an aspect of the present invention, there is provided a junction piece for connecting at least one first piece of conduit to a second piece of conduit extending at an angle to said first piece, said junction piece comprising:
a first substantially planar surface, having at least two non-parallel first edges, wherein at least one pair of said first edges is separated by a second edge; and
a respective second substantially planar surface extending along the entire length of each said first edge and extending therefrom substantially perpendicularly to said first surface;
characterised in that a respective second substantially planar surface does not extend along any of the length of said second edge.

By providing a junction piece having a first surface and second surfaces extending perpendicularly therefrom with edges of said first surface having no second surfaces extending therefrom , this provides the advantage that junction pieces for conduit can be formed with minimal or no requirement for welding or adhesion.

The junction piece may be adapted to connect more than two pieces of conduit.

Under certain circumstances, for instance where a T-piece or four-way junction is made, this provides the advantage of enabling the junction piece to be made without the need for any welding.

According to another aspect of the present invention, there is provided a cover plate for a joint between lids of adjacent pieces of conduit, the cover plate comprising:
a) a substantially planar surface having:
   (i) a first substantially linear edge;
   (ii) a second substantially linear edge running substantially parallel to said first edge;
   (iii) a third substantially linear edge extending from said first edge in a direction not parallel to said first and second edges and away from said second edge; and
   (iv) a fourth substantially linear edge joining said first and second edges; and
b) plate side portions extending substantially perpendicularly to said surface from said first, said second and said third edge, respectively, wherein said fourth edge is not provided with a said side portion;
characterised in that:
(i) said plate side portions are adapted to engage corresponding lid side portions of adjacent lids of conduit;
(i) a fifth substantially linear edge joins said third edge to said second edge, wherein said fifth edge is not provided with a said side portion; and/or
(iii) a further third substantially linear edge extends from said second edge in a direction not parallel to said first and second edges and away from said first edge, wherein said plate side portions extend substantially perpendicularly from the or each said third edge, and said fifth substantially linear edge joins said third edge to said further third edge.

According to a further aspect of the present invention, there is provided a cover for a junction piece between adjacent lengths of conduit, the cover comprising:
a lid defining a first substantially planer surface and having at least two first edges, wherein at least one pair of first edges is separated by a respective second edge, and a respective first edge portion extending along the entire length of each said first edge and extending in a respective plane substantially perpendicular to said first surface; and
at least one cover plate for covering a respective said second edge, the or each said cover plate defining a respective second substantially planar surface and comprising a pair of substantially straight third edges and a respective second edge portion extending from said third edges in a respective plane substantially perpendicular to said second surface;
wherein said at least one cover plate is adapted to cover part of a respective further lid arranged in use adjacent said first lid; and
characterised in that an end of at least one said second edge portion is adapted to abut the adjacent said first edge portion or to abut a further edge portion of said further lid.

By providing a cover plate for the joint between the lids of a length of conduit having non-parallel sides and another length of conduit, the advantage is provided that a conduit portion forming a corner piece can be formed from a single sheet of material which is cut and bent with minimal welding or adhesion whilst still providing a cover plate, offering the advantages of easy cleaning and therefore increased hygiene around the joints between the lids of adjacent lengths of conduit.

The substantially straight third edges of at least one said cover plate may be substantially parallel to each other.

In a preferred embodiment, at least one second edge portion extends only partially along the associated third edge.

By providing the cover plate with edge portions which do not extend entirely along the edge of the first surface, of the lid, to which they are connected, the advantage is provided that the cover plate can be formed from a sheet of material which is simply cut and bent. Ideally the cover plate edge portions which extend entirely along edges are adapted to engage first and further lid edge portions which have no bend at their junction, and on first and further lid edge portions where a bend is formed at their junction, second cover plate edge portions extend only as far as that bend.

In another preferred embodiment, the lid is provided with a gasket, preferably of neoprene, to ensure a secure seal, thereby further reduce the risk to hygiene.

As an aid to understanding the invention, preferred embodiments thereof will now be described, by way of example only, and not in limitative sense with reference to the accompanying drawings in which:

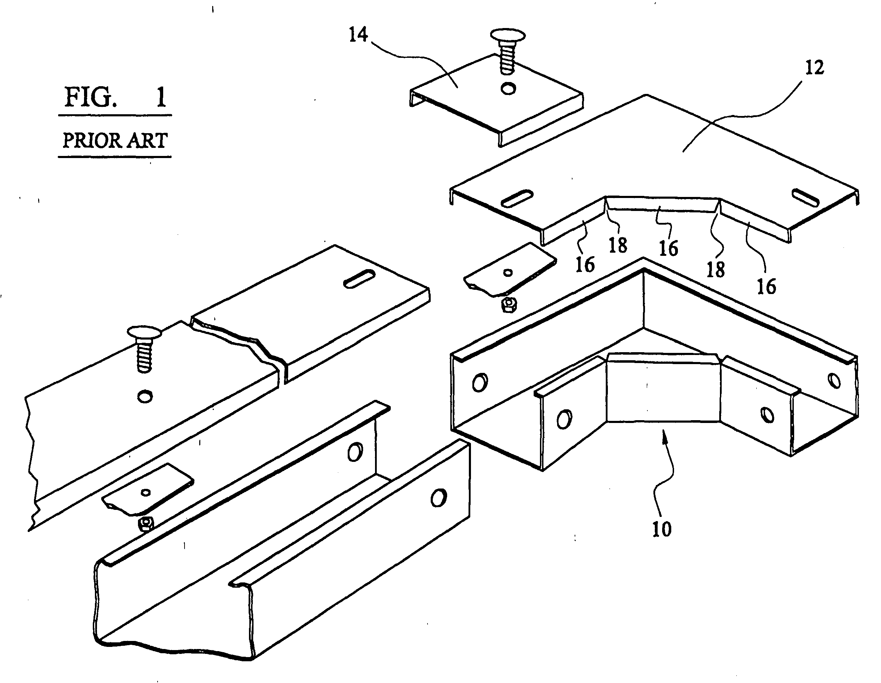

Figure 1 is a perspective view of a prior art corner conduit portion with respective lid and cover plate;
Figure 2 is a perspective view of a conduit corner piece with respective lid of a first embodiment of the present invention;
Figure 3 is a plan view of a blank of the corner piece of Figure 2;
Figure 4 is a perspective view, including a cover plate, of a second embodiment of the present invention; and
Figure 5 is a perspective view, including a lid and cover plate, of a third embodiment of the present invention.

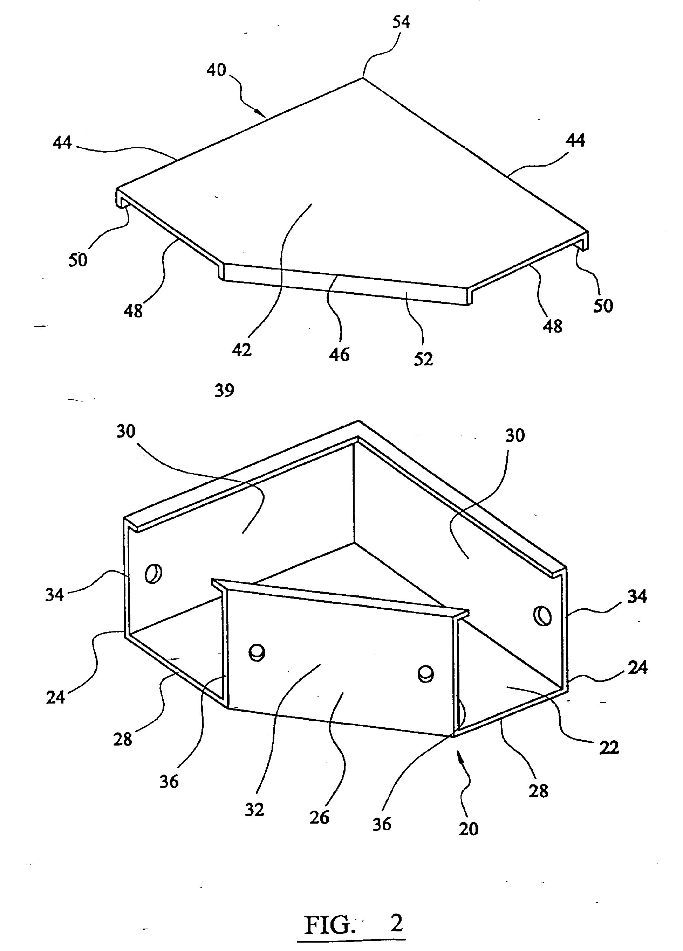

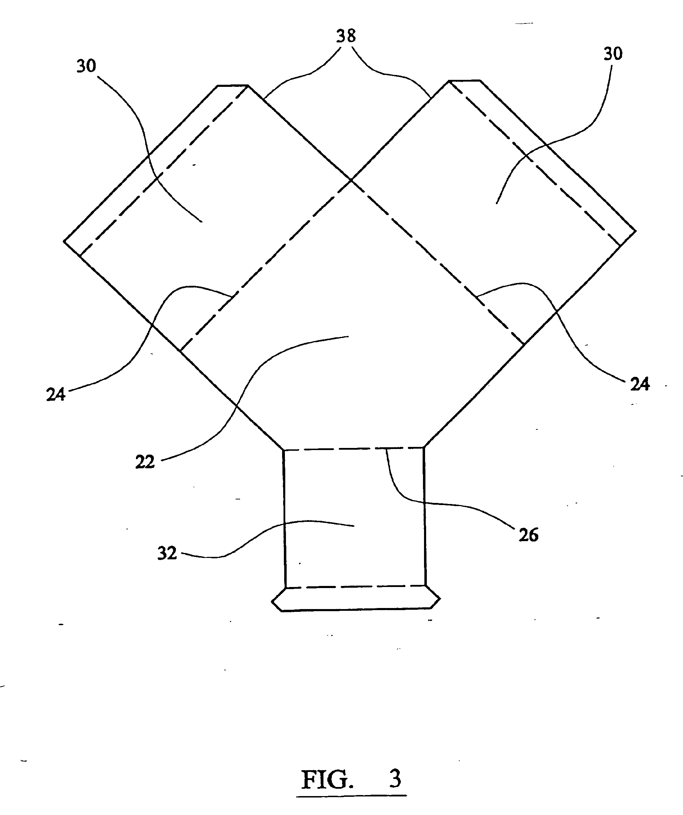

Referring to Figure 2, a conduit corner piece 20 comprises a first planar surface or base 22, having first edges 24, 26, separated by second edges 28. Second planar surfaces or sides 30, 32 extend from first edges 24, 26 in a direction generally perpendicular to the base 22. Sides 30, 32 have third edges 34, 36 respectively. The corner piece 20 is formed from a blank as shown in Figure 3. In Figure 3 the dotted lines indicate the lines along which bends are made to create edges 24, 26 and thus form sides 30, 32 perpendicular to base 22. Edges 38 are brought together and welded to form line 39.

Figure 2 also shows a lid 40 for conduit corner piece 20. The lid 40 comprises a generally planar surface 42 having first edges 44, 46 separated by respective second edges 48. First edges 44,46 have extending from them, in a plane generally perpendicular to said first surface, first edge portions 50, 52. Edge portions 50 of lid 40 are adapted to engage sides 30 of conduit corner piece 20, and edge portion 52 is adapted to engage side 32.

As pointed out above, the conduit corner piece 20 is formed by the bending of a cut sheet material and welding along line 39 where sides 30 meet. The external edge of line 39 is then smoothed and polished so as to form a surface which is more easily cleaned and presents less of a hygiene risk. Similarly, lid 40 is formed by the bending of a sheet of cut metal and along line 54 which joins edge portions 44. Again this weld would be smoothed and polished for reasons of hygiene.

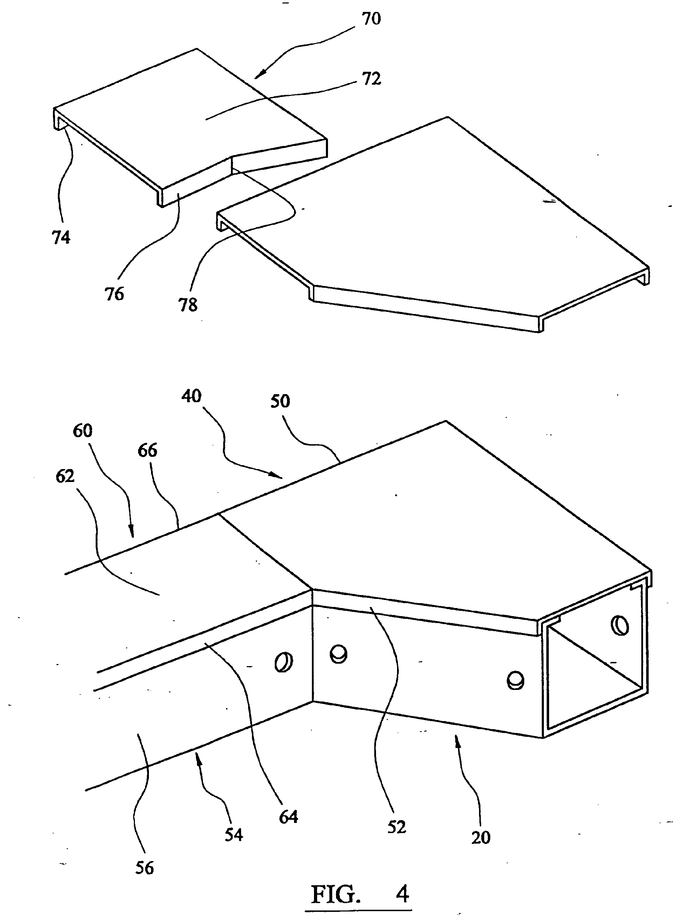

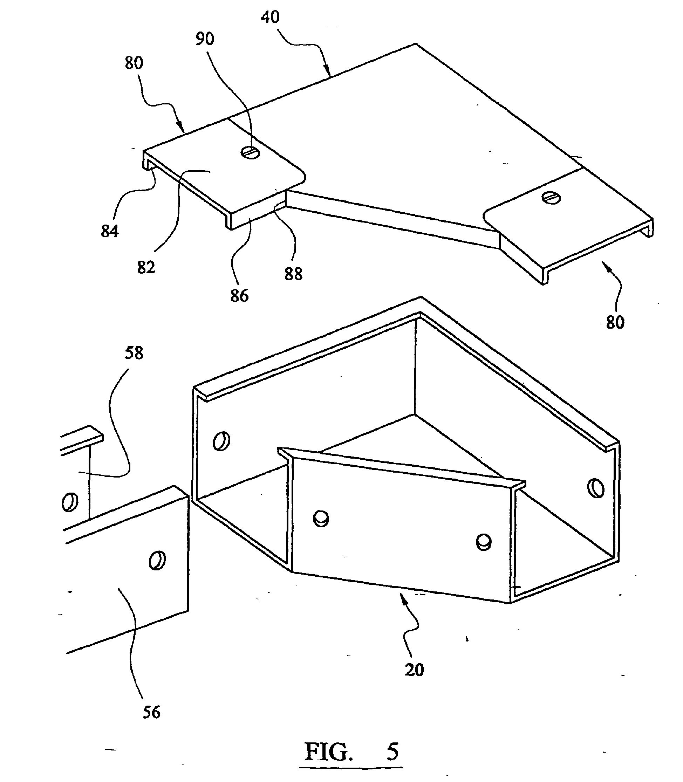

Figure 4 shows conduit corner piece 20 in use with lid 40 mounted to the corner piece 20. The corner piece 20 is also mounted to an elongate conduit portion 56 which comprises base surface (not shown) and parallel side surfaces 56, 58 (shown in Figure 5). An elongate lid 60 comprising a generally planar surface 62 and edge portions 64, 66 is mounted to conduit portion 56. A cover plate 70 comprising a generally planar surface 72 and edge portions 74, 76 is also provided. Edge portion 76 is angled at 78.

In use, cover plate 70 is mounted to conduit lids 40, 60, such that cover plate edge portion 74 engages lid edge portions 50, 66 and edge portion 76 engages edge portions 64, 52 such that angled part 78 is located adjacent the junction between edge portions 64, 52.

Cover plate 70 cannot be constructed by the simple process of cutting and bending a sheet of material and is generally formed by the cutting and bending of a sheet of material and the additional welding into position of at least part of edge portion 76. Cover plates 70 and lid 40 may be engaged at assembly by simply spot-welding the two parts together. Alternatively, cover plates 70 and lid 40 may be connected at the point of installation, where a turnbuckle (not shown) could be used to engage these parts.

In Figure 5. cover plates 80 are shown mounted to lid 40. Each cover plate 80 comprises a planar surface 82 and edge portions 84, 86. Cover plate 80 in use also engages lids 40, 60. Edge portion 84 is generally straight and extends along the entire edge of surface 82 to which it is attached. Edge portion 84 engages edge portions 66 and 44 of lids 60 and 40 respectively. Edge portion 86 engages edge portion 64 and extends only as far as 88. At point 88, edge portion 86 engages edge portion 52 of lid 40 so as to form a continuous surface therewith.

Cover plates 80 and lid 40 may be mounted to each other at assembly by simply spot-welding the two parts together. Alternatively, cover plates 80 and lid 40 may be connected at the point of installation, where a turnbuckle 90 could be used to fasten these parts together.

It will be appreciated by persons skilled in the art that the above embodiments have been shown by way of example only and not in any limitative sense, and that various alterations and modifications are possible without departure from the scope of the invention as defined by the appended claims. For example, edge portion 86 may extend along edge portion 52 and not edge portion 64 and only engage with edge portion 64 at 88.

## Claims

1. A cover plate (70) for a joint between lids of adjacent pieces of conduit (20, 56), the cover plate comprising:
a) a substantially planar surface (72) having:
(i) a first substantially linear edge (76);
(ii) a second substantially linear edge (74) running substantially parallel to said first edge;
(iii) a third substantially linear edge extending from said first edge in a direction not parallel to said first and second edges and away from said second edge; and
(iv) a fourth substantially linear edge joining said first and second edges; and
b) plate side portions extending substantially perpendicularly to said surface from said first, said second and said third edge, respectively, wherein said fourth edge is not provided with a said side portion;
**characterised in that**:
(i) said plate side portions are adapted to engage corresponding lid side portions (64, 52) of adjacent lids of conduit;
(i) a fifth substantially linear edge joins said third edge to said second edge, wherein said fifth edge is not provided with a said side portion; and/or
(iii) a further third substantially linear edge extends from said second edge in a direction not parallel to said first and second edges and away from said first edge, wherein said plate side portions extend substantially perpendicularly from the or each said third edge, and said fifth substantially linear edge joins said third edge to said further third edge.

2. A cover for a junction piece (20) between adjacent lengths of conduit, the cover comprising:
a lid (40) defining a first substantially planer surface and having at least two first edges (44, 46), wherein at least one pair of first edges is separated by a respective second edge (48), and a respective first edge portion (50, 52) extending along the entire length of each said first edge and extending in a respective plane substantially perpendicular to said first surface; and
at least one cover plate (80) for covering a respective said second edge, the or each said cover plate defining a respective second substantially planar surface and comprising a pair of substantially straight third edges and a respective second edge portion (84, 86) extending from said third edges in a respective plane substantially perpendicular to said second surface;
wherein said at least one cover plate is adapted to cover part of a respective further lid arranged in use adjacent said first lid; and
**characterised in that** an end of at least one said second edge portion is adapted to abut the adjacent said first edge portion or to abut a further edge portion of said further lid.

3. A cover according to claim 2, wherein the substantially straight third edges of at least one said cover plate (80) are substantially parallel to each other.

4. A cover according to claim 2 or 3, wherein at least one second edge portion (84, 86) extends only partially along the associated third edge.

5. A cover according to any of claims 2 to 4, wherein the lid (40) is provided with a gasket (not shown), preferably of neoprene, to ensure a secure seal, thereby further reducing the risk to hygiene.

6. A junction piece (20) for connecting at least one first piece of conduit to a second piece of conduit extending at an angle to said first piece, said junction piece comprising:
a first substantially planar surface (22), having at least two non-parallel first edges (24, 26), wherein at least one pair of said first edges is separated by a second edge (28); and
a respective second substantially planar surface (30, 32) extending along the entire length of each said first edge and extending therefrom substantially perpendicularly to said first surface;
**characterised in that** a respective second substantially planar surface does not extend along any of the length of said second edge.

7. A junction piece (20) according to claim 6, wherein the junction piece is adapted to connect more than two pieces of conduit.

## Patentansprüche

1. Abdeckplatte (70) für eine Fuge zwischen Deckeln benachbarter Leitungskanalstücke (20, 56), wobei die Abdeckplatte Folgendes umfasst:
a) eine im Wesentlichen ebene Oberfläche (72) mit:
(i) einem ersten im Wesentlichen linearen Rand (76);
(ii) einem zweiten im Wesentlichen linearen Rand (74), der im Wesentlichen parallel zu dem genannten ersten Rand verläuft;
(iii) einem dritten im Wesentlichen linearen Rand, der von dem genannten ersten Rand in einer Richtung, die nicht parallel zu dem genannten ersten und zweiten Rand ist, und von dem genannten zweiten Rand weg verläuft; und
(iv) einem vierten im Wesentlichen linearen Rand, der den genannten ersten und zweiten Rand miteinander verbindet; und
b) Plattenseitenteile, die sich im Wesentlichen lotrecht zu der genannten Oberfläche von dem genannten ersten bzw. dem genannten zweiten bzw. dem genannten dritten Rand erstrecken, wobei der genannte vierte Rand nicht mit einem genannten Plattenseitenteil versehen ist;
**dadurch gekennzeichnet, dass**:
(i) die genannten Plattenseitenteile für den Eingriff mit entsprechenden Deckelseitenteilen (64, 52) benachbarter Leitungskanaldeckel ausgebildet sind;
(ii) ein fünfter im Wesentlichen linearer Rand den genannten dritten Rand mit dem genannten zweiten Rand verbindet, wobei der genannte fünfte Rand nicht mit einem genannten Plattenseitenteil versehen ist; und/oder
(iii) ein weiterer dritter im Wesentlichen linearer Rand von dem genannten zweiten Rand in einer Richtung, die zu dem genannten ersten und zweiten Rand nicht parallel ist, und von dem genannten ersten Rand weg verläuft, wobei die genannten Plattenseitenteile sich im Wesentlichen lotrecht von dem oder jedem dritten Rand erstrecken und der genannte fünfte im Wesentlichen lineare Rand den genannten dritten Rand mit dem genannten weiteren dritten Rand verbindet.

2. Deckel für ein Verbindungsstück (20) zwischen benachbarten Leitungskanalstücken, wobei der Deckel Folgendes umfasst:
einen Deckel (40), der eine erste im Wesentlichen ebene Oberfläche definiert und wenigstens zwei erste Ränder (44, 46) hat, wobei wenigstens ein Paar erster Ränder durch einen jeweiligen zweiten Rand (48) getrennt ist und ein jeweiliger erster Randabschnitt (50, 52) im Wesentlichen entlang der gesamten Länge jedes genannten ersten Rands verläuft und in einer jeweiligen Ebene, die zu der genannten ersten Oberfläche im Wesentlichen lotrecht ist, verläuft; und
wenigstens eine Abdeckplatte (80) zum Abdecken eines jeweiligen genannten zweiten Rands, wobei die oder jede genannte Abdeckplatte eine jeweilige zweite im Wesentlichen ebene Oberfläche definiert und ein Paar im Wesentlichen gerader dritter Ränder und einen jeweiligen zweiten Randabschnitt (84, 86), der sich von den genannten dritten Rändern in einer jeweiligen, zu der genannten zweiten Oberfläche im Wesentlichen lotrechten Ebene erstreckt, umfasst;
wobei die genannte wenigstens eine Abdeckplatte zum Abdecken von Teil eines jeweiligen weiteren Deckels ausgebildet ist, der im Gebrauch neben dem genannten ersten Deckel angeordnet ist; und
**dadurch gekennzeichnet, dass** ein Ende von wenigstens einem genannten zweiten Randabschnitt zur Anlage an dem benachbarten genannten ersten Randabschnitt oder zur Anlage an einem weiteren Randabschnitt des genannten weiteren Deckels ausgebildet ist.

3. Deckel nach Anspruch 2, bei dem die im Wesentlichen geraden dritten Ränder von wenigstens einer genannten Abdeckplatte (80) im Wesentlichen parallel zueinander sind.

4. Deckel nach Anspruch 2 oder 3, bei dem wenigstens ein zweiter Randabschnitt (84, 86) nur teilweise an dem assoziierten dritten Rand entlang verläuft.

5. Deckel nach einem der Ansprüche 2 bis 4, bei dem der Deckel (40) mit einer Dichtung (nicht gezeigt), vorzugsweise aus Neopren, versehen ist, um eine sichere Abdichtung zu gewährleisten, wodurch das Hygienerisiko weiter reduziert wird.

6. Verbindungsstück (20) zum Verbinden wenigstens eines ersten Leitungskanalstücks mit einem zweiten Leitungskanalstück, das in einem Winkel zu dem genannten ersten Stück verläuft, wobei das genannte Verbindungsstück Folgendes umfasst:
eine erste im Wesentlichen ebene Oberfläche (22), die wenigstens zwei nichtparallele erste Ränder (24, 26) hat, wobei wenigstens ein Paar der genannten ersten Ränder durch einen zweiten Rand (28) getrennt ist; und
eine jeweilige zweite im Wesentlichen ebene Oberfläche (30, 32), die entlang der gesamten Länge jedes genannten ersten Rands verläuft und sich davon im Wesentlichen lotrecht zu der genannten ersten Oberfläche erstreckt;
**dadurch gekennzeichnet, dass** eine jeweilige zweite im Wesentlichen ebene Oberfläche an keinem Teil der Länge des genannten zweiten Rands entlang verläuft.

7. Verbindungsstück (20) nach Anspruch 6, bei dem das Verbindungsstück zum Verbinden von mehr als zwei Leitungskanalstücken ausgebildet ist.

## Revendications

1. Plaque de couverture (70) pour un joint entre des couvercles de pièces adjacentes de conduit (20, 55), la plaque de couverture comprenant :
a) une surface essentiellement planaire (72) ayant :
(i) un premier bord essentiellement linéaire (76) ;
(ii) un deuxième bord essentiellement linéaire (74) courant de manière essentiellement parallèle audit premier bord ;
(iii) un troisième bord essentiellement linéaire s'étirant à partir du premier bord dans une direction non parallèle auxdits premier et deuxième bords et loin dudit deuxième bord ; et
(iv) un quatrième bord essentiellement linéaire joignant lesdits premier et deuxième bords ; et
b) des parties latérales de plaque s'étirant de manière essentiellement perpendiculaire à ladite surface à partir dudit premier, dudit deuxième et dudit troisième bord, respectivement, où ledit quatrième bord n'est pas muni d'une dite partie latérale de plaque ;
**caractérisée en ce que** :
(i) lesdites parties latérales de plaque sont adaptées pour venir en prise avec des parties latérales de couvercle correspondantes (64, 52) de couvercles adjacents de conduit ;
(ii) un cinquième bord essentiellement linéaire joint ledit troisième bord audit deuxième bord, où ledit cinquième bord n'est pas muni d'une dite partie latérale ; et/ou
(iii) un ultérieur troisième bord essentiellement linéaire s'étire à partir du deuxième bord dans une direction non parallèle auxdits premier et deuxième bords et loin dudit premier bord, où lesdites parties latérales de plaque s'étirent de manière essentiellement perpendiculaire à partir du ou de chaque dit troisième bord, et ledit cinquième bord essentiellement linéaire joint ledit troisième bord audit ultérieur troisième bord.

2. Couverture pour une pièce de jonction (20) entre des longueurs adjacentes de conduit, la couverture comprenant :
un couvercle (40) définissant une première surface essentiellement planaire et ayant au moins deux premiers bords (44, 46), où au moins une paire de premiers bords est séparée par un deuxième bord respectif (48), et une partie respective de premier bord (50, 52) s'étirant sur toute la longueur de chaque dit premier bord et s'étirant dans un plan respectif essentiellement perpendiculaire à ladite première surface ; et
au moins une plaque de couverture (80) pour couvrir un dit deuxième bord respectif, la ou chaque dite plaque de couverture définissant une deuxième surface respective essentiellement planaire et comprenant une paire de troisièmes bords essentiellement droits et une partie respective de deuxième bord (84, 86) s'étirant desdits troisièmes bords dans un plan respectif essentiellement perpendiculaire à ladite deuxième surface ;
où ladite au moins une plaque de couverture est adaptée pour couvrir une partie d'un ultérieur couvercle respectif disposé lors de l'utilisation de manière adjacente audit premier couvercle ; et
**caractérisée en ce qu'**une extrémité d'au moins une dite partie de deuxième bord est adaptée pour buter contre ladite partie de premier bord adjacente ou pour buter contre une ultérieure partie de bord dudit ultérieur couvercle.

3. Couverture selon la revendication 2, où les troisièmes bords essentiellement droits d'au moins une dite plaque de couverture (80) sont essentiellement parallèles l'un avec l'autre.

4. Couverture selon la revendication 2 ou 3, où au moins une partie de deuxième bord (84, 86) ne s'étire que partiellement le long du troisième bord associé.

5. Couverture selon une quelconque des revendications 2 à 4, où le couvercle (40) est muni d'un joint statique (non illustré), de préférence en néoprène, pour garantir un joint sûr, réduisant ainsi encore plus le risque pour l'hygiène.

6. Pièce de jonction (20) pour connecter au moins une première pièce de conduit à une deuxième pièce de conduit s'étirant à un angle par rapport à la première pièce, ladite pièce de jonction comprenant :
une première surface essentiellement planaire (22), ayant au moins deux premiers bords non parallèles (24, 26), où au moins une paire de dits premiers bords est séparée par un deuxième bord (28) ; et
une deuxième surface respective essentiellement planaire (30, 32) s'étirant sur toute la longueur de chaque premier bord et s'étirant à partir de celui-ci de manière essentiellement perpendiculaire à ladite première surface ;
**caractérisée en ce qu'**une deuxième surface respective essentiellement planaire ne s'étire pas sur une quelconque partie de la longueur dudit deuxième bord.

7. Pièce de jonction (20) selon la revendication 6, où la pièce de jonction est adaptée pour connecter plus de deux pièces de conduit.
